# EUROPEAN PATENT APPLICATION

(11) **EP 2 533 467 A1**
(43) Date of publication of application: **12.12.2012**
(21) Application number: 11305727.7
(22) Date of filing: 10.06.2011
(51) Int. Cl.: H04L 12/28, G05B 23/02

(54) **A method, a system, a measurement device, a computer program and a computer program product for monitoring a device**

(71) Applicant: Alcatel Lucent, 75007 Paris (FR)
(72) Inventor: Kopp, Dieter, 75428 Illingen (DE); Raehmer, Silke, 75428 Illingen (DE); Templ, Wolfang, 74372 Sersheim (DE)
(74) Representative: Kleinbub, Oliver

(57) **Abstract**

The invention concerns a method for monitoring a device (101) wherein a predetermined characteristic quantity is measured, a comparison between a measured value or sequence of values of said characteristic quantity and a stored reference value or sequence of reference values is performed, and an action to put said device (101) into a secure state is triggered depending on the result of said comparison.

## Description

### Field of the invention

The invention relates to a method, a system, a measurement device, a computer program and a computer program product for monitoring a device.

### Background

For monitoring devices in individual homes, for example controllers that are included into home appliances and connected with each other via an in-house data-bus are known.

Furthermore intelligent sockets, comprising automatic circuit breakers are known that interrupt the electric circuit upon detection of abnormal energy demand by a home appliance connected to the intelligent socket.

Additionally, these intelligent sockets may be connected via a data network, using a separate data-bus.

Both solutions require installing a separate wired communication system, causing high installation effort and cost.

### Summary

The object of the invention is thus to reduce installation effort and cost and increase security of operating devices such as home appliances.

The main idea of the invention is to monitor a device wherein a predetermined characteristic quantity is measured a comparison between a measured value of said characteristic quantity and a stored reference value is performed and an action to put said device into a secure state is triggered, depending on the result of said comparison. This way the appropriate action for avoiding damage to the device or its environment is initiated quickly and reliably without additional installation, effort and cost.

In a preferred embodiment the monitoring multiple devices, in particular devices of a facility or home connected to the same utility supply line, are monitored at a central location. This way the entire home or facility may be monitored from an easily accessible location with a single smart meter.

Advantageously said action comprises sending information about said comparison to a predetermined receiver. Information about the situation is transmitted to a remote location this way.

Advantageously said action comprises setting said device into a predetermined secure operating mode. A quick-response action is implemented this way without any delay.

Advantageously a reference value is determined, depending on a measured value of said predetermined characteristic quantity and stored. The characteristic behavior of the device or devices is determined this way in a self learning process and stored for later comparison to newly measured values.

Advantageously a measured value is allocated to a device in particular from a plurality of measured values depending on information about at least one measured value of said characteristic quantity, in particular a characteristic sequence of measured values. The measurement values are this way selected from multiple available measurements of many devices. Monitoring of a plurality of devices is this way possible with the same smart meter.

Advantageously a reference value appropriate for said device is determined in particular from a plurality of reference values depending on information about at least one measured value of said characteristic quantity, in particular a characteristic sequence of measured values. The reference values are found this way that they are relevant for the measure values currently measured. Monitoring of a plurality of devices with the same smart meter is possible this way.

A system for monitoring a device wherein a measurement device is adapted to measure said predetermined characteristic quantity, a processing device, adapted to determine a comparison between a measured value of said characteristic quantity and said stored reference value and to trigger an action to put said device into a secure state, depending on the result of said comparison is part of the idea of the invention as well.

An inventive measuring device for monitoring a device adapted to measure a predetermined characteristic quantity to determine a comparison between a measured value of said characteristic quantity and a stored reference value and to trigger an action to put said device into a secure state, depending on the result of said comparison is also within the idea of the invention.

The further developments of the invention can be gathered from dependant claims and the following description.

### Brief description of the figures

In the following, the invention will be explained further, making reference to the attached drawings.
Figure 1 schematically shows a first part of a system for monitoring a device.
Figure 2 schematically shows a second part of a system for monitoring a device.
Figure 3 schematically shows a flow chart showing some typical steps in a method according to the invention.

### Description of the embodiment

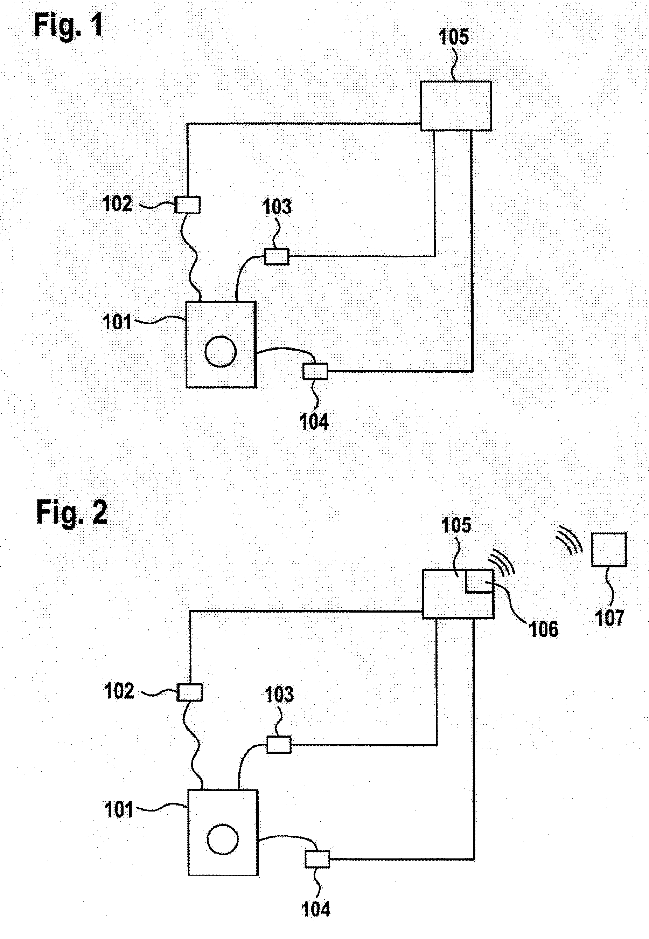

Figure 1 shows a first part of a system for monitoring a device.

Said device is for example a washing machine 101. Said washing machine 101 comprises of an electrical connector, a water intake hose and a water drainage hose.

Said electric connector is connected to a power outlet, for example a wall socket 102 with an electrical meter and a circuit breaker.

Said water intake hose is connected to a water outlet, for example a faucet 103 with a fresh water meter and an electric valve.

Said water drainage hose is connected to a sewage system, for example a sewage pipe via a sewage water meter.

Said system comprises a processing device, for example a smart meter 105 having a processor adapted to run software resembling the functions of the methods described below.

Said smart meter 105 is connected to said electrical meter, said circuit breaker, said fresh water meter, said electric valve and said sewage water meter. Said connections are for example electrical wires.

Alternatively some or all of said connections may be wireless connections, using wireless senders or receivers. Said wireless connections are for example connections according to the well known Bluetooth protocol. Another type of wireless connections may be used as well.

Alternatively said smart meter 105 comprises of all or any subset of aforementioned meters and/or actuators, i.e. valves or circuit breakers. In this case said smart meter 105 may comprise all or any subset of connectors for water and electricity, or if required gas or any other utility. This reduces complexity of the system and allows easy and cheap installation of the inventive system into existing homes.

Figure 1 shows a system according to a first embodiment of the invention. A system according to a second embodiment of the invention is depicted in figure 2.

Devices and connections of the devices in the second embodiment of the invention are the same as explained for the first embodiment referencing figure 1. Reference sings for devices and connections that are the same as in figure 1 are used in figure 2 as well. The description made for figure 1 applies likewise to the devices and connectors having the same reference signs.

Additionally, the system according to the second embodiment of the invention comprises a sender 106 and a receiver 107.

Said sender 106 is mounted in said smart meter 105.

Said sender 106 is for example adapted to send messages using the well known UMTS-interface. Said messages are for example according to the well known SMS or SNMP format. The event messages could be included in a OSS system by SNMP or other smart grid/metering protocols like 61850, 61870, 61968 (CIM)

Said receiver 107 is adapted to receive messages sent by said sender. Said receiver 107 is for example adapted to receive messages using the well known UMTS-protocol. Said receiver 107 is for example adapted to receive and display messages in the well known SMS or SNMP format.

Said sender 106 and said receiver 107 may be adapted to communicate directly using wireless LAN protocol. In a preferred embodiment said sender 106 and said receiver 107 are adapted to communicate using the existing wireless telecommunication network, e.g. according to the well known LTE standard.

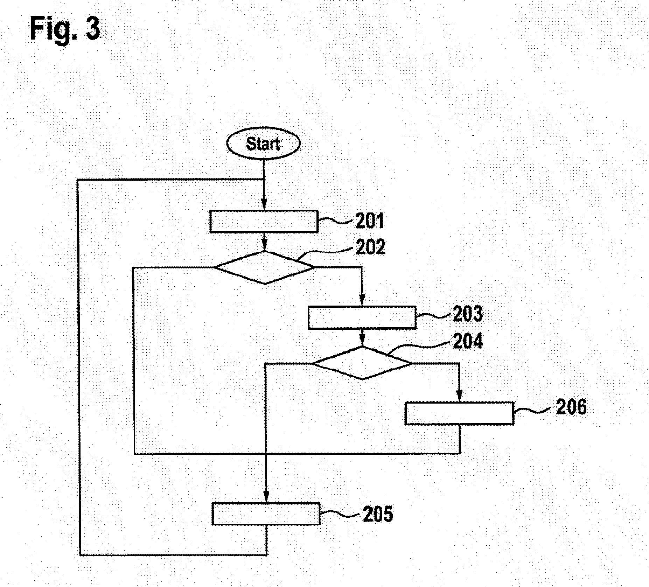

A method according to the invention is explained below making reference to figure 3. Said method for example starts whenever said smart meter 105 is switched on.

After the start a step 201 is executed.

In said step 201 a value or sequence of values of a predetermined characteristic quantity is measured and stored. For example said smart meter 105 determines the value or sequence of values of said electrical meter, said fresh water meter and/or said sewage meter from the input voltage read at the electrical connections to the respective meters and stores the equivalent value or sequence of values as reference value or sequence of reference values in internal storage. Methods for determining meter readings from input voltages well known to the person skilled in the art and not explained here any further.

Afterwards a step 202 is executed. In said step 202 a test is performed to determine whether training phase has completed.

After the training phase is complete a step 203 is executed. Otherwise a step 205 is executed. Said training phase may be triggered by an empty storage for measured values on said smart meter 105 or by pressing a reset on said smart meter 105. Said training phase may be completed after 100 values have been measured. Any other mechanism to complete said training phase may be applied as well, for example waiting for measurement values for at least one day or for termination of a washing cycle of said washing machine 101.

In said step 203 said measured value or sequence of values of said predetermined characteristic quantity is compared to a stored reference value or sequence of reference values. To that end, said stored reference value or sequence of reference values is read from storage and compared to the measured value.

Afterwards a step 204 is executed.

In said step 204 a test is performed to determine whether a trigger condition is met. If said trigger condition is met a step 206 is executed. Otherwise said step 205 is executed. Said trigger condition is for example met if said measured value or sequence of values deviates from said reference value or sequence of reference values for more than a certain predetermined value. Said predetermined value may for example be a current in ampere currently used by said device 101 that is read using said electrical meter of said wall socket 102.

Alternatively or additionally said trigger condition may be met if said sewage meter shows an amount of water drainage that is less then said fresh water amount measured by said fresh water meter, hence indicating a leakage within the water system of said washing machine 101.

Alternatively any combination of meter readings from said electrical meters, said fresh water meter and/or said switch meter may be used to determine malfunction of said washing machine 101 or connectors or hoses.

In said step 204, said smart meter 105 performs an action. For example said smart meter 105, according to said first embodiment of the invention, sets said washing machine 101 into a secure state, for example by tripping said circuit breaker and hence disconnecting said washing machine 101 from electrical power.

This way the appropriate action is initiated quickly and reliably without any delay by the smart meter 105 directly.

Alternatively according to said second embodiment of said invention said smart meter 105 sends a SMS including information about said result of said comparison to said smart phone 107. For example an SMS with the text "washing machine malfunction" is sent to said smart phone 107.

In said step 205 said measured value or sequence of values of said predetermined characteristic quantity is stored. For example said smart meter 105 stores said measured value or sequence of values in a characteristic curve of measured values over time. Alternatively said smart meter 105 may be adapted to store said measured value or sequence of values in a list of measured values.

Afterwards said step 201 is executed.

Said method ends for example whenever said smart meter 105 is turned off. Alternatively said method may be started and ended according to a predetermined time schedule that is programmable and triggered by said smart meter 105.

For creating the sequence of measured value a predetermined sample time, e.g. 1 second may be used and the sequence of measured values may be created from subsequent values sampled.

Furthermore the characteristic behavior of said device is determined for example in a self learning process and stored for later comparison to newly measured values, using said method described above.

Said method applies likewise in case one smart meter 105 is monitoring a plurality of devices. An exemplary system for monitoring a plurality of devices may include a single smart meter 105 and multiple devices to be monitored. Said smart meter 105 may be adapted to have one input for each meter that is measuring utilities used by said devices. Alternatively, in particular for electrical meters, said smart meter 105 may be connected to multiple electrical meters at the same input connector of said smart meter 105.

Optionally said single smart meter 105 is installed at a central location to monitor a utility supply line or all utility supply lines and a sewage drain or all sewage drains of a home or a facility. This allows monitoring multiple devices or all devices, in particular devices of a facility or home connected to the same utility supply line or sewage drain at said central location. Additionally multiple homes or multiple facilities may be monitored at the same time by installing said smart meter at the main supply or main sewage drain.

In both cases the method described above applies likewise with additional modifications to determine which measured value originates from which of the meters connected to said smart meter 105.

For example in the case where multiple electrical meters are connected to said smart meter 105. The device from which a value measured originates is determined depending on a characteristic behavior of said device. For example consumed current demand is monitored by said smart meter 105 during said training phase to determine said characteristics of individual devices to be monitored.

To determine which measured value is to be allocated to which device from a plurality of measured values information about at least one measured value of said characteristic quantity, for example measured current values equivalent to measured voltage or a characteristic sequence of measured current values is stored during said training phase.

When comparing said measured values to stored reference values, in this case a reference value appropriate for said device to be monitored is determined from the plurality of measured values stored, depending on information about one measured value of said characteristic quantity or a characteristic sequence of measured values.

Preferably characteristic sequences of measured values or reference values are used. This enhances for example reliability and error tolerance as well as identification of devices.

This means that the reference values or sequence of reference values are found that are relevant for the measured values currently measured.

Additionally or optionally both sending of said information about said comparison and performing said action to put said device into said predetermined secure operating mode may be performed.

The advantage of the above mentioned method is to protect said device on one hand and on the other hand to protect the local or global electric power grid or water supply grid from damage. Similar to water and electricity and also gas supply may be monitored and controlled this way.

Said devices may be any devices that are operated on for example gas, water or electricity. Said devices may also be operated on any other utility.

Alternatively or additionally to operating said circuit breaker said smart meter 105 may be adapted to close said electric valve in said faucet 103 upon detection of a water leakage in said device, for example said washing machine 101.

Said characteristic sequence of measured values may be characteristic curves as functions of time or a list of characteristic values.

Said smart meter 105 may be adapted to communicate with other smart meters 105 or servers. This way said smart meter 105 is integrated into a home automation network.

Alternatively to monitoring amounts also time periods of utility usage or amount changes may be monitored, for example voltage demand pulses or charging pulses for electric batteries may be monitored. The same applies to water or gas flow. In case of batteries said action is generated in case the charging waveform, i.e. measured sequence of values, does not match a sequence of reference values. For example for inductively charging car batteries the monitoring is done on a central location, e.g. a traffic center, for several car batteries.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

The functions of the various elements shown in the figures, including any functional blocks labeled as 'processors', may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term 'processor' or 'controller' should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Similarly, any switches shown in the figures are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts and the like represent various processes which may be substantially represented in computer readable medium and so executed by a computer or processor, whether or not such computer or processor is explicitly shown.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

## Claims

1. A method for monitoring a device (101), **wherein** a predetermined characteristic quantity is measured (201), a comparison between a measured value or sequence of values of said characteristic quantity and a stored reference value or sequence of reference values is performed (203), and an action (206) to put said device (101) into a secure state is triggered (204) depending on the result of said comparison.

2. The method according to claim 1, wherein multiple devices (101), in particular devices of a facility or home connected to the same utility supply line, are monitored at a central location.

3. The method according to claim 1, wherein said action (206) comprises sending information about said comparison to a predetermined receiver.

4. The method according to claim 1, wherein said action (206) comprises setting said device (101) into a predetermined secure operating mode.

5. The method according to claim 1, wherein a reference value or sequence of reference values is determined depending on a measured value or sequence of values of said predetermined characteristic quantity and stored (205).

6. The method according to claim 1, wherein a measured value or sequence of values is allocated to a device (101), in particular from a plurality of measured values, depending on information about at least one measured value of said characteristic quantity, in particular a characteristic sequence of measured values.

7. The method according to claim 1, wherein a reference value or sequence of reference values appropriate for said device (101) is determined, in particular from a plurality of reference values, depending on information about at least one measured value of said characteristic quantity, in particular a characteristic sequence of measured values.

8. A system for monitoring a device (101), **wherein** a measurement device (102, 103, 104, 105) is adapted to measure (201) a predetermined characteristic quantity, a processing device (105) is adapted to determine a comparison between a measured value or sequence of values of said characteristic quantity and a stored reference value or sequence of reference values, and to trigger (204) an action (206) to put said device (101) into a secure state depending on the result of said comparison.

9. The system according to claim 8, comprising a sender (106), adapted to send information about said comparison and a receiver (107), adapted to receive said information about said comparison.

10. The system according to claim 8, wherein said measurement device (105) is adapted to allocate a measured value or sequence of values to a device (101), in particular from a plurality of measured values from a plurality of devices (101), depending on information about at least one measured value of said characteristic quantity, in particular a characteristic sequence of measured values.

11. The system according to claim 8, wherein said measurement device (105) is adapted to determine a reference value or sequence of reference values appropriate for said device (101), in particular from a plurality of reference values for a plurality of devices (101), depending on information about at least one measured value of said characteristic quantity, in particular a characteristic sequence of measured values.

12. A measurement device (105) for monitoring a device (101), **adapted to** measure (201) a predetermined characteristic quantity, to determine (203) a comparison between a measured value or sequence of values of said characteristic quantity and a stored reference value or sequence of reference values, and to trigger (204) an action (206) to put said device (101) into a secure state depending on the result of said comparison.

13. The measurement device (105) according to claim 12, adapted to allocate a measured value or sequence of values of a characteristic quantity to a device (101), in particular from a plurality of measured values from a plurality of devices (101), depending on information about at least one measured value, in particular a characteristic sequence of measured values, and to determine a reference value or sequence of reference values appropriate for said device (101), in particular from a plurality of reference values for a plurality of devices (101), depending on information about at least one measured value, in particular a characteristic sequence of measured values.

14. The measurement device (105) according to claim 12, adapted to determine a reference value or sequence of reference values depending on a measured value or sequence of values of said predetermined characteristic quantity, and to store said reference value or sequence of reference values.

15. The measurement device (105) according to claim 12, comprising a sender (106) adapted to send information about said result of said comparison to a predetermined receiver (107), in particular via a telecommunications network.

16. A computer program for monitoring a device (101), **wherein** said computer program, when executed on a computer, causes the computer to perform the steps of the method of claim 1.

17. A computer program product for monitoring a device (101) comprising a computer usable medium having a computer readable program, **wherein** said computer readable program, when executed on a computer, causes the computer to perform the steps of the method of claim 1.
